# EUROPÄISCHE PATENTSCHRIFT

(11) **EP 1 053 149 B1**
(45) Veröffentlichungstag und Bekanntmachung des Hinweises auf die Patenterteilung: **14.08.2002**
(21) Anmeldenummer: 99907503.9
(22) Anmeldetag: 05.02.1999
(51) Int. Cl.: B60T 7/10, B60T 13/74

(54) **VORRICHTUNG UND VERFAHREN FÜR DIE FAHRSITUATIONSABHÄNGIGE BETÄTIGUNG EINER ELEKTRISCHEN FESTSTELLBREMSANLAGE**
METHOD AND DEVICE FOR ACTUATING AN ELECTRICAL PARKING BRAKE SYSTEM ACCORDING TO DRIVING CONDITIONS
PROCEDE ET DISPOSITIF POUR ACTIONNER UN SYSTEME DE FREIN DE STATIONNEMENT ELECTRIQUE EN FONCTION DE LA SITUATION DE CONDUITE

(30) Priorität: 07.02.1998 DE 19804955; 13.08.1998 DE 19836687
(43) Veröffentlichungstag der Anmeldung: 22.11.2000
(73) Patentinhaber: Continental Teves AG & Co. oHG, 60488 Frankfurt (DE)
(72) Erfinder: ECKERT, Alfred, D-55129 Mainz-Hechtsheim (DE); BÖHM, Jürgen, D-65558 Oberneisen (DE); DIEBOLD, Jürgen, D-65760 Eschborn (DE)
(86) Internationale Anmeldenummer: EP9900752
(87) Internationale Veröffentlichungsnummer: WO9939951

(56) Entgegenhaltungen:
- WO-A-93/11014
- US-A- 4 629 043
- US-A- 5 180 038
- US-A- 5 706 909

## Beschreibung

Die vorliegende Erfindung bezieht sich auf eine elektrische Feststellbremsanlage für Kraftfahrzeuge gemäß dem Oberbegriff des Patentanspruchs 1. Ferner bezieht sich die vorliegende Erfindung auf ein Verfahren zum Betrieb einer elektri-schen Feststellbremsanlage für Kraftfahrzeuge gemäß dem Oberbegriff des Patentanspruchs 10.

Aus der Deutschen Patenschrift DE 39 09 907 C2 ist eine Feststellbremse für Kraftfahrzeuge bekannt. Die aus dieser Druckschrift bekannte Feststellbremse weist eine Steuervorrichtung auf, die als Steuerelektronik ausgebildet ist, und die eingangsseitig mit mindestens einem Drehzahlsensor zur Erfassung der Raddrehzahl, mit mindestens einem Drehrichtungssensor zur Erfassung der Drehrichtung eines Rades und mit einem Schalthebelstellungssensor zur Erfassung der für eine angewählte Getriebestufe eines Schaltgetriebes charakteristischen Schalthebelstellung verbunden ist. Ferner ist zusätzlich ein willkürlich betätigbarer Feststell- oder Bremshebel vorgesehen, der unabhängig von einem Antriebsaggregat eine Einwirkung auf ein Bremsseil zum Lösen bzw. Schließen der Radbremsen ermöglicht. Die bekannte Feststellbremse kann daher auch ohne Zutun des Fahrers automatisch betätigt, d. h. gespannt oder gelöst, werden, sobald sich das Fahrzeug in einer Park - oder Fahrsituation befindet, die ein Spannen bzw. Lösen der Feststellbremse erfordert.

Der Nachteil dieses bekannten Standes der Technik besteht darin, daß lediglich eine unzureichende fahrsituationsabhängige Umsetzung eines Fahrerwunsches vorgesehen ist, da nur im Stillstand des Fahrzeuges bzw. bei sehr kleinen Geschwindigkeit ein möglicher Bremseneingriff vorgesehen ist. Die bekannte Feststellbremse reagiert auf einen Fahrerwunsch lediglich in einer manuellen Betriebsart, bei der die Parameter des Fahrzustands nur einen begrenzten Einfluß haben.

Ferner ist aus der DE 41 29 919 A1 eine als Fremdkraftbremsanlage ausgebildete Feststellbremse mit elektromotorischer Bremsenbetätigung und einem elektronischen Steuergerät bekannt, wobei das Steuergerät mit Sensoren, welche Betriebszustände des Kraftfahrzeugs erfassen, elektrisch verbunden ist. Das elektronische Steuergerät steuert das Spannen und Lösen der Radbremsen in Abhängigkeit von Signalen einer
Bremsenbetätigungseinrichtung und/oder der Sensoren. Ein in dieser Druckschrift genannter Betriebszustand ist die Betätigung der Fußbremse. Allerdings geht aus dieser Druckschrift nicht hervor, daß und wie der durch eine Betätigung der Feststellbremsanlage ausgelöste Bremsvorgang fahrsitutionsabhängig beeinflußt wird, sondern es wird lediglich eine Fahrerentlastung durch Automatisierung angestrebt (vgl. Spalte 3, Zeilen 54-56).
Aus US-A-4 629 043 ist eine elektrische Feststellbrems anlage, wie im Oberbegriff des Anspruchs 1 definiert, bekannt.
Die Aufgabe der vorliegenden Erfindung besteht daher darin, die Nachteile des Standes der Technik zu vermeiden, und insbesondere eine elektromechanisch betätigbare Feststellbremse zu schaffen, die eine einfache und reproduzierbare Umsetzung eines Fahrerwunsches unter Berücksichtigung des Fahrzustands ermöglicht, wodurch der Komfort des Bremsvorgangs erhöht wird und Beeinträchtigungen der Fahrstabilität während des Bremsvorgangs weitgehend vermieden werden.

Diese Aufgabe wird bei einer Vorrichtung bzw. einem Verfahren der eingangs genannten Art erfindungsgemäß dadurch gelöst, daß die Eingangssignale ferner die Fahrzeuggeschwindigkeit (v_{KFZ}) aufweisen.

Gemäß einer bevorzugten Ausführungsform der Erfindung sind die Ausgangssignale der Steuereinheit fahrsituationsabhängig, und die Eingangssignale zur Ermittlung des Fahrsituation des Kraftfahrzeugs sind die Fahrzeuggeschwindigkeit und der Betriebszustand der Betriebsbremsanlage. Die Auswahl der Fahrzeuggeschwindigkeit und des Betriebszustand der Betriebsbremsanlage als ausschließliche Parameter zur Einschätzung der Fahrsituation ist deshalb besonders vorteilhaft, weil diese zum einen zur Erzielung einer komfortablen und sicheren Steuerung des Abbremsvorgangs ausreichend ist und zum anderen die Auswahl von lediglich zwei Eingangsgrößen die Datenmenge bzw. den Steueraufwand reduziert, da auf bereits vorhandene Signale einer Betriebsbremsanlage zurückgegriffen wird.

Vorteilhafterweise weisen die Eingangssignale den Betriebszustand einer Zündungsvorrichtung (an/aus) des Kraftfahrzeugs auf. Dadurch kann bei ausgeschalteter Zündung sichergestellt werden, daß die elektrische Feststellbremsanlage bei ausgeschalteter Zündungsvorrichtung lediglich gespannt werden kann. Dies ist aus Sicherheitsgründen, insbesondere als sogenannte Kindersicherung, vorteilhaft.

Gemäß einem bevorzugten Ausführungsbeispiel der Erfindung weisen die Eingangssignale den Betriebszustand der elektronisch gesteuerten Feststellbremsanlage auf. Durch Vergleich des aktuellen Fahrerwunsches mit dem aktuellen Betriebszustand der elektrischen Feststellbremsanlage kann erreicht werden, daß eine Betätigung der Bedienungseinrichtung stets einen Wechsel des Betätigungszustands der erfindungsgemäßen Feststellbremsanlage zur Folge hat.

Gemäß einer weiteren bevorzugten Ausführungsform der Erfindung weisen die Ausgangssignale den Sollwert der Betäti-gungskraft und den Sollwert der zeitlichen Ableitung der Betätigungskraft auf. Diese beiden Signale sind zur elektronischen Steuerung des Abbremsvorgangs einschließlich von dessen Dynamik besonders geeignet.

Eine einfache und bedienungsfreundliche Umsetzung eines Fahrerwunsches ergibt sich, wenn die Bremsbedienungseinrichtung ein Tastschalter ist. Dabei kann der der Tastschalter gleichberechtigt entweder als Einfachtaster oder aber als Doppel- bzw. Zweifachtaster (Wipptaster) ausgeführt sein. Vorzugsweise führt eine Betätigung des Einfachttasters eine Änderung des aktuell vorherschenden Betätigungszustands der elektrischen Feststellbremsanlage herbei. Demgegenüber kann beim Doppel- bzw. Zweifachtaster unabhängig vom Betätigungszustand der Feststellbremsanlage ein Betätigungs- oder Lösevorgang für die Feststellbremse je nach gewählter Betätigungsrichtung des Tasters gezielt eingesteuert werden.

Gemäß einer weiteren bevorzugten Ausführungsform der Erfindung überprüft die elektronische Steuereinrichtung in einem Schritt, ob das Kraftfahrzeug fährt. In einem solchen fahrenden Zustand des Kraftfahrzeuges wird bei nicht betätigter Betriebsbremsanlage die elektrische Feststellbremsanlage mittels der elektronischen Steuereinrichtung aus Komfortgründen bevorzugt mit einer langsamen Dynamik betrieben. Anderenfalls wird bei fahrendem Fahrzeug und betätigter Betriebsbremsanlage eine Bremsung mit schnellerer Dynamik durch die elektronische Steuereinrichtung veranlaßt, wenn die elektrische Feststellbremsanlage parallel zur Betriebsbremsanlage betätigt wird. Dies hat zur Folge, daß auf den Fahrer einwirkende unerwünscht hohe "Brems"-Beschleunigungen bei Betätigung der Feststellbremsanlage im fahrenden Zustand vermieden werden.

Gemäß einer weiteren bevorzugten Ausführungsform der Erfindung wird ein Bremsvorgang, wenigstens solange wie der Tastschalter betätigt ist, eingeleitet. Im fahrenden Zustand des Fahrzeugs bietet dies dem Fahrer die Möglichkeit durch die Dauer der Betätigung des Tastschalters auf den Bremsvorgang Einfluß zu nehmen.

Vorzugsweise wird der Bremsvorgang mit einem konstanten Sollwert der Betätigungskraft auch nach dem Lösen des Tastschalters für eine Zeitdauer fortgesetzt, wobei die Zeitdauer eine Funktion der Fahrzeuggeschwindigkeit ist. Durch die Berücksichtigung dieser Zeitdauer wird insbesondere für kleine, aber noch meßbare Fahrzeuggeschwindigkeiten der Übergang zum Stillstand des Fahrzeugs bei betätigter Feststellbremse sichergestellt.

Gemäß einer weiteren bevorzugten Ausführungsform der Erfindung leitet die elektronische Steuervorrichtung, bei ruhendem Fahrzeug im Rahmen der Meßgenauigkeit und betätigter Betriebsbremsanlage, einen Abbremsvorgang mit einer schnelleren Dynamik ein und einen Abbremsvorgang mit einer langsameren Dynamik ein, wenn die Betriebsbremsanlage nicht betätigt ist. Dadurch kann ein unerwünschtes "Nicken" des Fahrzeugs während des Abbremsvorgangs vermieden werden.

Die Erfindung sowie weitere Vorteile und Ausgestaltungen derselben wird bzw. werden nachfolgend anhand der Zeichnungen näher erläutert. In den Zeichnungen zeigen:
- Fig. 1: ein schematisches Diagramm, das den Aufbau der erfindungsgemäßen elektronischen Feststellbremse zeigt;
- Fig. 2: ein schematisches Flußdiagramm, das die Ablaufsteuerung der elektronischen Feststellbremse gemäß der vorliegenden Erfindung darstellt; und
- Fig. 3: eine schematische Übersicht zur Veranschaulichung des Betriebs der erfindungsgemäßen Feststellbremse.

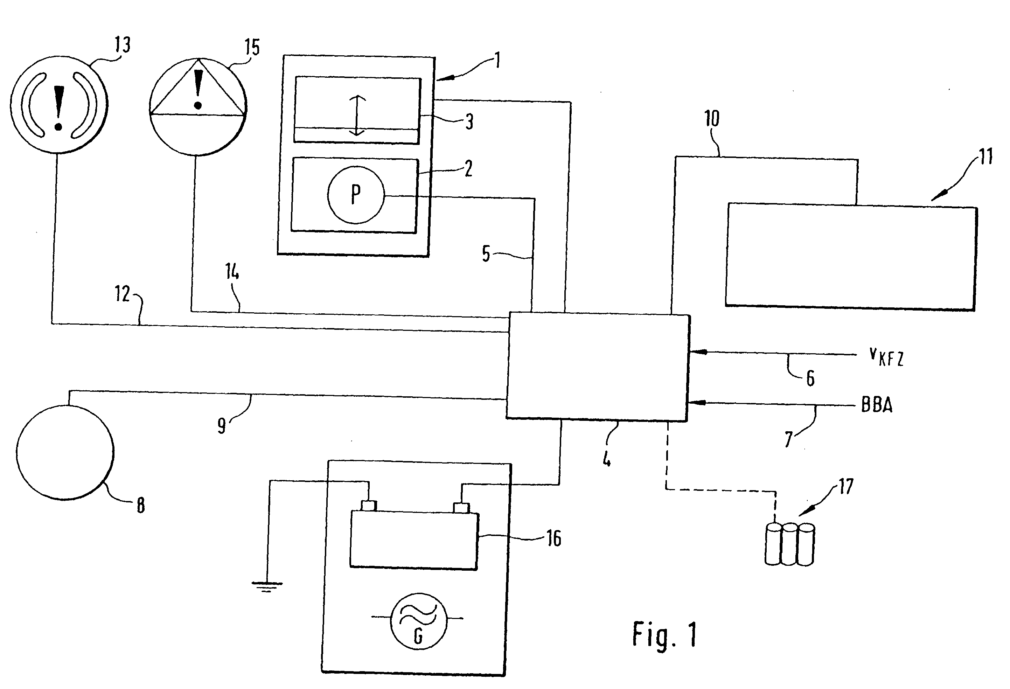

In Fig. 1 ist das Systemkonzept einer erfindungsgemäßen, elektromechanisch betätigbaren Feststell- bzw. Parkbremsanlage (EPB) schematisch dargestellt. Als fahrerbetätigte Bedienungseinrichtung für die elektromechanisch betätigbare Feststellbremsanlage ist ein Tastschalter (1) vorgesehen, der gleichberechtigt entweder als Einfachtaster (2) oder als Zweifach- bzw. Doppeltaster (Wipptaster) (2) ausgeführt sein kann. Der Einfachtaster unterscheidet lediglich die Betriebszustände "betätigt" und "nicht betätigt" und bewirkt bei jeder Betätigung einen Zustandswechsel im Betätigungszustand der Feststellbremsanlage.

Der alternativ verwendbare Zweifach- bzw. Doppeltaster 2 verfügt über drei Schaltpositionen: Betätigen (B), Lösen (L) und Ruheposition (0). Im nichtbetätigtem Zustand befindet sich der Zweifachtaster (Wipptaster) in der Ruheposition, wobei der zuletzt eingestellte EPB-Betätigungszustand (Gespannt/Gelöst) beibehalten wird. Sowohl Zuspannen als auch Lösen der EPB wird mittels einer Betätigung des Zweifachtasters 2 in die entsprechende Schaltposition (B bzw. L) vom Fahrer aktiv initiiert. Bei Stillstand bedeutet dies ein zeitlich und in der Maximalkraft F_{MAX} durch eine Steuereinheit 4 vordefiniertes Zuspannen und Lösen der Feststellbremse (AN/AUS-Funktion). Die Zuspann- und Lösedynamik ist dabei entsprechend den vorliegenden Dynamikanforderungen geeignet bemessen. Die maximale Zuspannkraft ist durch die auf die Hangsituation ausgelegte Zuspannkraft einschließlich erforderlichem Sicherheitsfaktor definiert und damit fahrzeugabhängig. Bei einer Betätigung der EPB während der Fahrt wird, solange der Zweifachtaster 2 in der Position 'B' betätigt ist, die Höhe der Zuspannkraft dosiert. Das Zuspannen erfolgt dabei mit einem vorgegebenen, im allgemeinen konstanten Kraftgradienten bis zum Erreichen einer oberer Kraftgrenze bzw. der maximalen Betätigungskraft F_{MAX}. Bei nicht betätigtem Taster (Ruheposition 0) wird die eingestellte Zuspannkraft der EPB beibehalten und kann durch eine erneute Tasterbetätigung (Position B) weiter erhöht werden. Das Lösen der elektrischen Feststellbremse erfolgt durch Tasterbetätigung in Richtung Lösen (Position L).

Währen bei Zweifachtasterbedienung der EPB das Zuspannen und Lösen der Feststellbremse durch separate Schaltpositionen initiiert werden kann, muß im Falle der Bedienung mittels eines Einfachtasters der gegenwärtig eingestellte Betätigungszustand der EPB im Bedienkonzept berücksichtigt werden. Bei Fahrzeugstillstand erfolgt das Zuspannen der Bremse durch Druck auf den Einfachtaster, sofern der gegenwärtige Betätigungszustand der EPB 'Gelöst' ist. Ein erneuter Tasterdruck führt zum sofortigen Lösen der elektrischen Feststellbremse. Die EPB-Betätigung während der Fahrt entspricht im wesentlichen der, wie sie bereits für den Fall der Zweifachtasterbedienung betrachtet wurde. Für die Dauer der Betätigung des Tasters wird die Zuspannkraft mit definiertem Kraftgradienten bis zum Erreichen der vorgegebenen Maximalkraft F_{MAX} erhöht. Wird der Einfachtaster nicht mehr betätigt, so wird nicht wie beim Zweifachtaster die Zuspannkraft gehalten sondern die Feststellbremse mit maximaler Aktuatordynamik gelöst.

Der Tastschalter 1 weist einen vom Fahrer betätigbaren Drucktaster 2 und eine permanente Statusanzeige 3 auf, die vorzugsweise als eine rote Fahne ausgebildet ist. Aus Sicherheitsgründen (Redundanzprinzip) kann die elektromechanisch betätigbare Feststellbremsanlage einen weiteren, nicht dargestellten Tastschalter aufweisen. Der Tastschalter 1 ist mit einer Steuereinheit 4, die auch als EBP-ECU (ECU = "electronic control unit" = Elektronische Steuer- oder Regeleinheit) bezeichnet werden kann, über eine Leitung 5 verbunden. Die Information über den Betriebszustand des Tastschalters 1 wird über die Leitung 5 an die Steuereinheit 4 übertragen. Die wesentliche Aufgabe der Steuereinheit 4 besteht darin, neben der Realisierung einer Steuer- bzw. Regelungsstrategie zur Ansteuerung der elektromechanisch betätigbaren Parkbremsanlage, den mittels des Tastschalters 1 signalisierten Fahrerwunsches in entsprechende Steuersignale, die Sollwerte für die Steuerung/Regelung der elektromechanisch betätigbaren Feststellbremsanlage sind, umzusetzen. Von (nicht dargestellten) Sensoren werden aus Gründen des Fahrkomforts einer EPB-Bremsung und der Fahrstabilität während eines EPB-Bremsvorgangs der Betätigungszustand der Betriebsbremsanlage (BBA) und die Fahrzeuggeschwindigkeit v_{KFZ} des Kraftfahrzeugs an die Steuereinheit 4 übertragen, um die Betätigung der elektromechanisch betätigbaren Feststellbremsanlage fahrsituationsabhängig zu gestalten. Grundsätzlich erfolgt die Umsetzung des mittels des Tastschalters 1 signalisierten Fahrerwunsches in entsprechende Steuersignale durch die Steuereinheit 4 in der Form, das beim Einfachtaster (2) jede Betätigung des Tastschalters 1 zu einem Wechsel des aktuellen Betätigungszustand (Gespannt/Gelöst) der elektromechanisch betätigbaren Feststellbremsanlage führt. Dazu wird ein vorgegebener Schwellwert F_{S,SCHWELLE} verwendet. Beispielsweise wird der EPB-Zustand "Gespannt" erkannt, wenn die von der Steuereinheit 4 geschätzte Betätigungskraft F_{S} größer als F_{S,SCHWELLE} ist. Ansonsten wird der EPB-Zustand "Gelöst" erkannt. Der Betätigungszustand der Betriebsbremsanlage wird über eine Leitung 6 und die Fahrzeuggeschwindigkeit v_{KFZ} über eine Leitung 7 an die Steuereinheit 4 übertragen. Damit bei ausgeschalteter Zündungsvorrichtung 8 kein unbeabsichtigtes Lösen der Bremsanlage stattfinden kann, was beispielsweise als Kindersicherung dient, ist der Betriebszustand der Zündungsvorrichtung (An/Aus) 8 ebenfalls ein Eingangssignal für die Steuereinheit 4. Wenn von der Zündungsvorrichtung 8 über die Leitung 9 ein Signal an die Steuereinheit 4 geliefert wird, das anzeigt, daß die Zündungsvorrichtung 8 ausgeschaltet ist, wird nur das Spannen der Bremsanlage zugelassen. Eine Betätigung des Tastschalters 1 für diesen Betriebsfall führt dazu, daß die Feststellbremsanlage auf die maximale Zuspannkraft gespannt wird. Befindet sich die Feststellbremsanlage bereits in gespanntem Zustand, so erfolgt trotz Betätigung des Tastschalters 1 keine Ansteuerung der Feststellbremsanlage. Über eine Leitung 10 steuert die Steuereinheit 4 eine Aktuatoreinrichtung 11 der elektromechanisch betätigbaren Feststellbremsanlage an. Derartige Aktuatoreinrichtungen 11 können dabei durchaus unterschiedlich ausgeführt sein. Vorteilhafte Ausgestaltungen solcher Aktuatoreinrichtungen 11 sind beispielsweise Zentralaktuatoren, die zentral auf mehrere Radbremsen einwirken können bzw. dezentrale Aktuatoren, die jeweils auf eine einzelne Radbremse einwirken. Derartige dezentrale Aktuatoren sind dabei bevorzugt jeweils in die Radbremse integriert. Die Steuereinheit 4 steuert über eine Leitung 12 eine Kontrollampe 13 an, die anzeigt, ob sich die elektromechanisch betätigbare Feststellbremsanlage in einem gespanntem Zustand befindet. Ferner steuert die Steuereinheit 4 über eine Leitung 14 eine Warnlampe 15 an, die einen Fehler oder einen Betriebsausfall der elektromechanisch betätigbaren Feststellbremsanlage anzeigt. Zur Energieversorgung der Steuereinheit 4 ist eine Fahrzeugbatterie 16 in Kombination mit einer bekannten Lichtmaschine (Generator) vorgesehen. Um einen Not- bzw. Hilfsbetrieb der Feststellbremsanlage auch bei ausgefallener Batterie sicherzustellen, ist zusätzlich eine Notbatterie 17 vorgesehen. Die Notbatterie 17 ist vorzugsweise als Batteriepack ausgebildet. Da in diesem Fall die Zündungsvorrichtung 8 nicht eingeschaltet werden kann, führt eine Betätigung des Tastschalters 1 ausschließlich zu einem Spannen der Feststellbremsanlage auf die maximale Spannkraft. Somit ist sichergestellt, daß auch bei ausgefallener Fahrzeugbatterie 16 die elektromechanisch betätigbare Feststellbremsanlage mindestens einmal betätigt werden kann, um das Fahrzeug festzustellen.

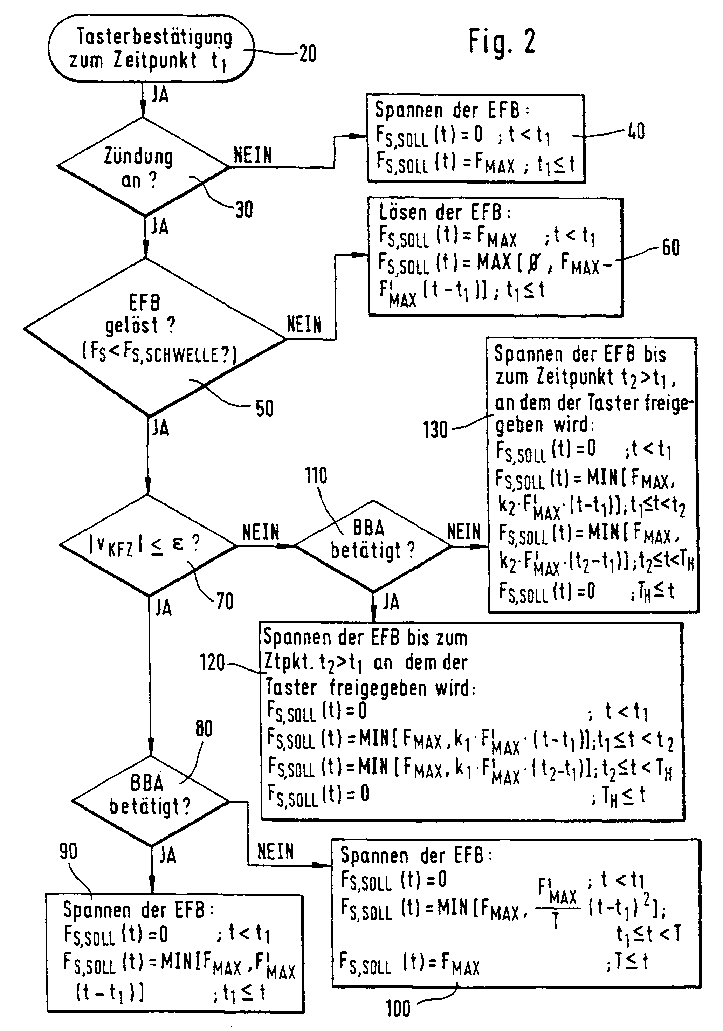

Anhand des Flußdiagramms der Fig. 2 wird im folgenden der Betrieb der erfindungsgemäßen elektromechanischen Parkbremsanlage erläutert. Die Ablaufsteuerung der erfindungsgemäßen elektromechanisch betätigbaren Parkbremsanlage wird gestartet, wenn der Tastschalter 1 zum Zeitpunkt t₁ betätigt wird. Dies ist in Fig. 2 schematisch durch den Schritt 20 dargestellt. Im Schritt 30 überprüft die Steuereinheit 4, ob die Zündungsvorrichtung 8 des Kraftfahrzeugs angeschaltet ist. Falls die Zündungsvorrichtung 8 nicht angeschaltet ist, wird aus Sicherheitsgründen, wie oben bereits näher erläutert wurde, die elektronische Feststellbremsanlage in einem Schritt 40 mit maximaler Zuspannkraft gespannt. Falls im Schritt 30 festgestellt wurde, daß die Zündungsvorrichtung 8 angeschaltet ist, wird in einem darauffolgenden Schritt 50 überprüft, ob sich die elektronische Feststellbremsanlage in einem gelösten Zustand befindet. Diese Information kann beispielsweise in einem (nicht dargestellten) Speicher der Steuereinheit 4, in jeweils aktualisierter Form, gespeichert sein. Die Abfrage bzw. der Vergleich im Schritt 50 ist deshalb notwendig, da grundsätzlich jede Betätigung des Tastschalters 1 zu einem Wechsel des aktuellen Betätigungszustandes der elektronischen Feststellbremsanlage führen soll. Falls das Ergebnis des Schritts 50 negativ ist, wird in einem Schritt 60 die elektronische Feststellbremsanlage gelöst. Das heißt, wenn die elektronische Feststellbremsanlage im gespannten Zustand ist, führt eine einmalige, kurze Betätigung des Tastschalters 1 zum Lösen der elektronischen Feststellbremsanlage und zum Anfahren des Belaglüftspiels mit maximaler Dynamik. Dies erfolgt dadurch, daß der Sollwert F_{S,SOLL} der Betätigungskraft gleich 0 gesetzt wird. Das Lösen der elektronischen Feststellbremsanlage wird nicht unter Berücksichtigung der aktuellen Fahrsituation vorgenommen, sondern erfolgt grundsätzlich so schnell wie möglich. Daher wird die zeitliche Ableitung des Sollwerts der Betätigungskraft F'_{S,SOLL} maximal eingestellt. Dies entspricht im wesentlichen der Aufgabe einer Parkbremsanlage, bei der im allgemeinen kein dosiertes Lösen derselben notwendig ist. Es sei bemerkt, daß es grundsätzlich auch denkbar wäre, das Lösen der elektronischen Feststellbremsanlage mit einer geringeren, vorgegebenen Dynamik durchzuführen, die nach weiteren Gesichtspunkten optimiert sein kann. Falls im Schritt 50 erkannt wird, daß sich die elektronische Feststellbremsanlage im gelösten Zustand befindet, führt eine Betätigung des Tastschalters 1 zu einem Spannen der elektronischen Feststellbremsanlage. Gemäß der vorliegenden Erfindung wird zur Berechnung des Sollwerts F_{S,SOLL} der Betätigungskraft als Funktion der Zeit die aktuelle Fahrsituation berücksichtigt. Dabei wird grundsätzlich unterschieden, ob sich das Fahrzeug in einem bewegten oder ruhenden Zustand befindet. Dazu werden Signale von Raddrehzahlsensoren oder ein daraus abgeleitetes Fahrzeuggeschwindigkeitssignal verwendet. Die Auflösungsgrenze der Raddrehzahlsensoren definieren eine untere Grenzgeschwindigkeit oder Schwelle ε, mit der die gemessene Fahrzeuggeschwindigkeit in einem Schritt 70 verglichen wird. Falls im Schritt 70 festgestellt wird, daß der Betrag der gemessenen Fahrzeuggeschwindigkeit v_{KFZ} kleiner oder gleich ε ist, kann daraus noch nicht mit absoluter Sicherheit darauf geschlossen werden, daß das Fahrzeug ruht. Dies beruht darauf, daß bei den heute verwendeten (passiven) Raddrehzahlsensoren das Problem besteht, daß kleine Fahrzeuggeschwindigkeiten nicht aufgelöst werden können und das Fahrzeug sich in diesem Fall zwar mit einer geringen, aber mit den Sensoren nicht mehr meßbaren Geschwindigkeit bewegen könnte. Daher muß ein weiteres Signal zur Absicherung der Fahrsituationserkennung herangezogen werden. Ein geeignetes Signal hierfür ist der Betätigungszustand der Betriebsbremsanlage (BBA). In einem Schritt 80 wird von der Steuereinheit 4 überprüft, ob die Betriebsbremsanlage betätigt ist. Unabhängig von dem Ergebnis des Schritts 80 wird die elektronische Feststellbremsanlage aufgrund einer einmaligen, kurzen Betätigung des Tastschalters 1 mit der maximalen Betätigungskraft F_{S,SOLL} = F_{MAX} zugespannt. Das Ergebnis der im Schritt 80 durchgeführten Abfrage wird lediglich dazu benutzt, die Dynamik zu bestimmen, mit der F_{S,SOLL} eingestellt wird. Falls im Schritt 80 festgestellt wird, daß die Betriebsbremsanlage betätigt ist, kann davon ausgegangen werden, daß das Fahrzeug tatsächlich steht. In diesem Fall gilt, bei entsprechender Vorgabe eines geeigneten ε, mit nahezu absoluter Sicherheit V_{KFZ} = 0. Damit entstehen beim Betätigen der elektronischen Feststellbremsanlage keine Komfortprobleme, wie zum Beispiel ein sogenanntes "Nicken" des Fahrzeuges während des Bremsvorganges. Daher kann in diesem Fall in einem Schritt 90 die elektronisch e Feststellbremsanlage mit maximaler Zuspanndynamik gesteuert werden, d.h. es gilt F'_{S,SOLL} = F'_{S,SOLL} = F'_{MAX}. Es sei bemerkt, daß die Aktuatoreinrichtung 11 die maximale Zuspanndynamik nach oben begrenzt. Allerdings kann F'_{MAX} auch unterhalb dieser vorgegebenen, oberen Grenze liegen, und zwar abhängig von einem Anforderungsprofil, wie zum Beispiel einem Kundenwunsch. Falls das Ergebnis des Schritts 80 darin besteht, daß von der Steuereinrichtung 4 festgestellt wurde, daß die Betriebsbremsanlage nicht betätigt ist, wird, wie oben bereits ausgeführt wurde, die elektronische Feststellbremsanlage in einem Schritt 100 bei einer einmaligen, kurzen Betätigung des Tastschalters 1 -wie im Schritt 90- mit der maximalen Betätigungskraft F_{S,SOLL} = F_{MAX} zugespannt. Allerdings kann in diesem Fall, also dem Fall, daß die Betriebsbremsanlage nicht betätigt ist, nicht sichergestellt werden, daß das Fahrzeug tatsächlich ruht, da es auch möglich ist, daß das Fahrzeug mit einer nicht meßbaren Geschwindigkeit rollt. Zur Vermeidung einer unkomfortablen EPB-Bremsung durch ein zu schnelles Anlegen der Bremsbeläge und einem damit verbundenen, ungewünschtem "Nicken" des Fahrzeugs wird die Zuspanndynamik dahingehend beeinflußt, daß der Gradient F'_{S,SOLL} innerhalb eines definierten Zeitintervalls von t₁ beginnend bis zu einer vorgegebenen Zeit T von F'_{S,SOLL}(T) = 0 auf F'_{S,SOLL}(T) = F'_{MAX} z. B. linear erhöht wird. Selbstverständlich ist analog dazu auch eine andere geeignete nichtlineare Steigerung von F'_{S,SOLL}(T) möglich. Dadurch wird ein ruckfreies, weiches Anlegen der Bremsbeläge bis zum tatsächlichen Stillstand der Kraftfahrzeugs erreicht. Durch die lineare Erhöhung des Gradienten der Bremskraft wird erreicht, daß das Zuspannen der elektronischen Feststellbremsanlage auf F_{MAX} in kurzer Zeit mit einer hohen Dynamik erreicht wird. Falls das Ergebnis des im Schritt 70 durchgeführten Vergleichs negativ ist, das heißt der Betrag von v_{KFZ} größer als die durch die Auflösungsgrenze der Raddrehzahlsensoren definierte Schwelle ε ist, was anzeigt, daß das Kraftfahrzeug tatsächlich mit einer meßbaren Geschwindigkeit fährt, so wird für die Dauer der Betätigung des Tastschalter 1, das heißt zwischen dem Zeitpunkt t₁, in dem der Tastschalter 1 betätigt wird bis zum Zeitpunkt t₂, in dem der Tastschalter 1 freigegeben wird, die Betätigungskraft für die elektronische Feststellbremsanlage von Null beginnend mittels F_{S,SOLL} mit einem definierten Sollkraftgradienten F'_{S,SOLL} < F'_{MAX} kontinuierlich bis auf die maximale Betätigungskraft F_{S,SOLL} = F_{MAX} erhöht. Da die Größe des Sollkraftgradienten F'_{S,SOLL} < F'_{MAX} mit dem die elektronische Feststellbremsanlage zugespannt wird, vom Betätigungszustand der Betriebsbremsanlage abhängt, wird in einem Schritt 110 überprüft, ob die Betriebsbremsanlage betätigt ist. Unabhängig von dem Ergebnis der Abfrage im Schritt 110 gilt, daß, wenn der Tastschalter 1 zum Zeitpunkt t₂ losgelassen wird, der aktuelle Zuspannzustand der elektronischen Feststellbremsanlage F_{S,SOLL} für eine Zeitdauer T_{H}, die eine Funktion von v_{KFZ} ist, gehalten wird. Danach wird die elektronische Feststellbremsanlage, wie oben bereits beschrieben wurde, gelöst. Die Dauer der Haltezeit T_{H} ist von der Fahrzeuggeschwindigkeit v_{KFZ} abhängig und nimmt vorzugsweise mit abnehmender Fahrzeuggeschwindigkeit linear zu. Oberhalb einer oberen Grenzgeschwindigkeit, zum Beispiel 30 km/h, ist die Haltezeit T_{H} = 0. Die Dauer der Haltezeit T_{H} kann allerdings auch entsprechend einem beispielsweise kundenspezifischem Anforderungsprofil modifiziert werden. Durch die Berücksichtigung einer Haltezeit T_{H} wird, insbesondere für kleine, aber noch meßbare Fahrzeuggeschwindigkeiten v_{KFZ}, der Übergang zum Stillstand des Fahrzeugs bei betätigter Feststellbremse sichergestellt. Kommt das Fahrzeug während dieser Haltezeit zum Stillstand, so wird dann, entsprechend der oben für diesen Fall angegebenen Vorgehensweise, die elektronische Feststellbremsanlage automatisch auf die maximale Betätigungskraft F_{S,SOLL} = F_{MAX} zugespannt und damit das Fahrzeug festgestellt. Das Ergebnis der Abfrage im Schritt 110 wird dazu verwendet, die Größe des Sollkraftgradienten F'_{S,SOLL} < F'_{MAX}, mit der die elektronische Feststellbremsanlage zugespannt wird, zu bestimmen. Falls im Schritt 110 festgestellt wird, daß die Betriebsbremsanlage betätigt ist, wird der Sollkraftgradient F'_{S,SOLL} = k₁ * F'_{MAX} eingestellt, wobei 0 < k₁ < 1 gilt. In diesem Fall, in dem das Fahrzeug bereits durch die Betriebsbremsanlage gebremst wird, kann im Schritt 120 der Sollkraftgradient in der Phase der Betätigung des Tastschalters 1 ohne Komfortverlust relativ groß, verglichen mit dem Fall, in dem die Betriebsanlage nicht betätigt ist, gewählt werden, was zu einem schnelleren Feststellen der elektronisch en Feststellbremsanlage führt. Falls das Ergebnis im Schritt 110 ist, daß die Betriebsanlage nicht betätigt ist, wird der Sollkraftgradient F'_{S,SOLL} = k₂ * F'_{MAX} gewählt, wobei 0 < k₂ < k₁ < 1 gilt. In diesem Fall, also dem Fall des Schritts 130, fährt das Fahrzeug nicht gebremst, so daß der Sollkraftgradient F'_{S,SOLL} aus Komfortgründen relativ klein gewählt wird, was zu einem, im Vergleich mit dem Schritt 120, langsameren, aber komfortablen Feststellen der elektronisch en Feststellbremsanlage führt.

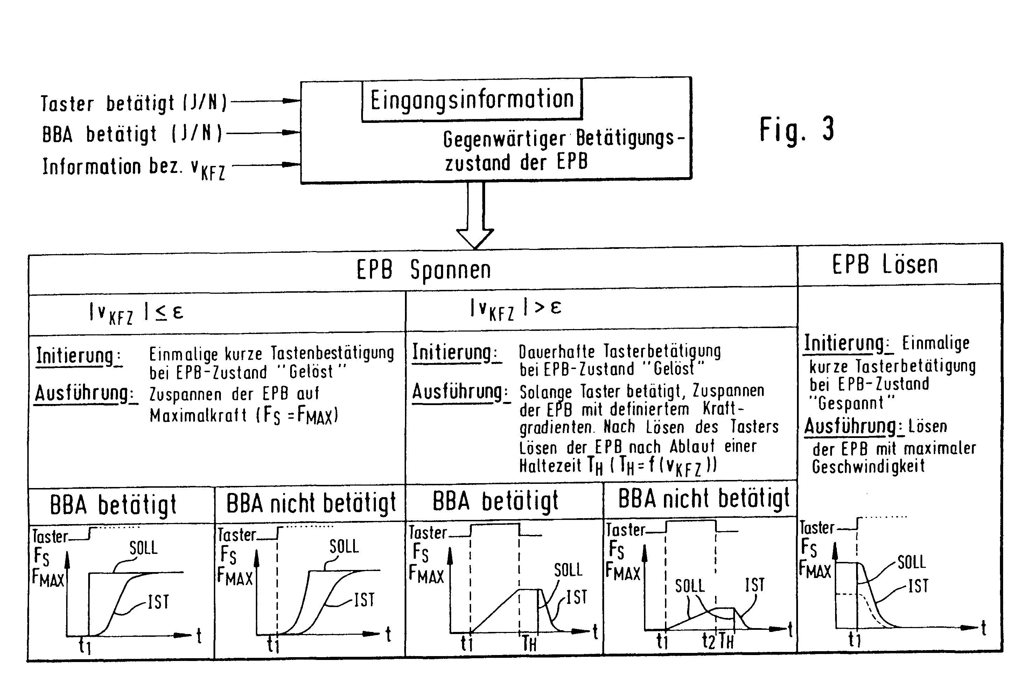

In Fig. 3 ist eine schematische Übersicht dargestellt, anhand welcher der Betrieb der erfindungsgemäßen elektronisch en Feststellbremsanlage näher erläutert ist. Insbesondere sind in der Übersicht der Fig. 3 Diagramme angegeben, die den Zustand des Tastschalters 1, sowie die Soll-Werte (Steuersignale) und die Ist-Werte, das heißt die tatsächlich durch die Regelung bzw. Steuerung erhaltenen Werte, der Betätigungskraft F_{S} als Funktion der Zeit darstellen.

### Bezugszeichenliste:

- 1: Tastschalter
- 2: Drucktaster
- 3: Statusanzeige
- 4: Steuereinheit oder Steuereinrichtung
- 5: Leitung
- 6: Leitung
- 7: Leitung
- 8: Zündungsvorrichtung
- 9: Leitung
- 10: Leitung
- 11: Leitung
- 12: Leitung
- 13: Kontrollampe
- 14: Leitung
- 15: Warnlampe
- 16: Fahrzeugbatterie/Generator
- 17: Notbatterie
- 20 bis 130: Verfahrensschritte

## Patentansprüche

1. Elektronische Feststellbremsanlage für Kraftfahrzeuge mit einer Bremsbedienungseinrichtung (1) und einer elektronischen Steuereinheit (4) zur Umwandlung von Eingangssignalen in entsprechende Ausgangssignale, die zur Ansteuerung einer auf zumindest eine Radbremse der Feststellbremsanlage einwirkenden Aktuatoreinrichtung (11) vorgesehen sind, wobei die Eingangssignale
- den Betriebszustand der Bremsbedienungseinrichtung (1),
- den Betriebszustand der Betriebsbremsanlage (BBA), d. h. 'betätigt' oder 'nicht betätigt',
- den Betriebszustand einer Zündungsvorrichtung (8) des Kraftfahrzeugs,d. h. 'an' oder 'aus',
- die Fahrzeuggeschwindigkeit (v_{KFZ}) aufweisen,
**dadurch gekennzeichnet, daß** die Eingangssignale ferner den aktuellen Betriebszustand der elektronischen Feststellbremsanlage, d. h. 'gelöst' oder 'gespannt', aufweisen und daß die fahrsituationsabhängigen Ausgangssignale der Steuereinheit (4) den Sollwert der Betätigungskraft (F_{S,SOLL}) und den Sollwert der zeitlichen Ableitung (F'_{S,SOLL}) der Betätigungskraft (F_{S,SOLL}) aufweisen.

2. Elektronische Feststellbremsanlage nach Anspruch 1, **dadurch gekennzeichnet, daß** die Bremsbedienungseinrichtung ein Tastschalter (1) ist.

3. Elektronische Feststellbremsanlage nach Anspruch 2, **dadurch gekennzeichnet, daß** die Bremsbedienungseinrichtung als Einfach-Taster (1) ausgeführt ist.

4. Elektronische Feststellbremsanlage nach einem der Ansprüche 2 oder 3, **dadurch gekennzeichnet, daß** eine Betätigung des Tastschalters (1) eine Änderung des Betätigungszustands der elektronischen Feststellbremsanlage, d. h. 'gelöst'/'nicht gelöst', herbeiführt.

5. Elektronische Feststellbremsanlage nach Anspruch 1, **dadurch gekennzeichnet, daß** die Bremsbedienungseinrichtung als Zweifach- bzw. Doppel-Taster (1) ausgeführt ist.

6. Verfahren zum Betrieb einer elektronischen Feststellbremsanlage für Kraftfahrzeuge, insbesondere nach einem der vorhergehenden Ansprüche, mit einer Bremsbedienungseinrichtung und einer elektronischen Steuereinheit (4) zur Umwandlung von Eingangssignalen in entsprechende Ausgangssignale, die zur Ansteuerung einer auf zumindest eine Radbremse der Feststellbremsanlage einwirkenden Aktuatoreinrichtung (11) vorgesehen sind, wobei die Steuereinheit als Eingangssignale
- den Betriebszustand der Bremsbedienungseinrichtung (1),
- den Betriebszustand der Betriebsbremsanlage (BBA), d. h. 'betätigt' oder 'nicht betätigt',
- den Betriebszustand einer Zündungsvorrichtung (8) des Kraftfahrzeugs, d. h. 'an' oder 'aus',
- die Fahrzeuggeschwindigkeit (v_{KFZ}) erfaßt,
**dadurch gekennzeichnet, daß** als Eingangssignal ferner der aktuelle Betriebszustand der elektronischen Feststellbremsanlage, d. h. 'gelöst' oder 'gespannt', durch die Steuereinheit (4) und daß die fahrsituationsabhängigen Ausgangssignale der Steuereinheit (4) den Sollwert der Betätigungskraft (F_{S,SOLL}) und den Sollwert der zeitlichen Ableitung (F'_{S,SOLL}) der Betätigungskraft (F_{S,SOLL}) aufweisen.

7. Verfahren nach Anspruch 6, **dadurch gekennzeichnet, daß** die elektronische Steuereinheit (4) in dem Fall, daß die elektronische Steuereinheit (4) in einem Schritt (70) detektiert, daß das Fahrzeug fährt, einen Abbremsvorgang mit einer schnelleren Dynamik einleitet, wenn die Betriebsbremsanlage betätigt ist, und einen Abbremsvorgang mit einer langsameren Dynamik einleitet, wenn die Betriebsbremsanlage nicht betätigt ist.

8. Verfahren nach einem der Ansprüche 6 bis 7, **dadurch gekennzeichnet, daß** ein Bremsvorgang, wenigstens solange wie der Tastschalter (1) betätigt ist, eingeleitet wird.

9. Verfahren nach Anspruch 8, **dadurch gekennzeichnet, daß** der Bremsvorgang mit einem konstanten Sollwert der Betätigungskraft auch nach dem Lösen des Tastschalters (1) für eine Zeitdauer (T_{H}) fortgesetzt wird, wobei die Zeitdauer (T_{H}) eine Funktion der Fahrzeuggeschwindigkeit (v_{KFZ}) ist.

10. Verfahren nach einem der Ansprüche 6-9, **dadurch gekennzeichnet, daß** die elektronische Steuereinheit (4) in dem Fall, daß die elektronische Steuereinheit (4) im Schritt (70) detektiert, daß das Fahrzeug im Rahmen der Meßgenauigkeit ruht, einen Abbremsvorgang mit einer schnellen Dynamik einleitet, wenn die Betriebsbremsanlage betätigt ist, und einen Abbremsvorgang mit einer langsameren Dynamik einleitet, wenn die Betriebsbremsanlage nicht betätigt ist.

## Claims

1. Electronic parking brake system for automotive vehicles including a brake operating device (1) and an electronic control unit (4) for converting input signals into corresponding output signals which are destined for actuation of an actuator device (11) that acts on at least one wheel brake of the parking brake system, wherein the input signals exhibit
- the operating condition of the brake operating device (1),
- the operating condition of the service brake system (SBS), i.e., 'actuated' or 'not actuated',
- the operating condition of an ignition device (8) of the automotive vehicle, i.e., 'on' or 'off',
- the vehicle speed (v_{KFZ}),
**characterized in that** the input signals additionally exhibit the current operating condition of the electronic parking brake system, i.e., 'released' or 'applied', and **in that** the output signals of the control unit (4) which are responsive to the driving situation exhibit the nominal value of the actuating force (F_{S,SOLL}) and the nominal value of the time derivative (F'_{S,SOLL}) of the actuating force (F_{S,SOLL}).

2. Electronic parking brake system as claimed in claim 1, **characterized in that** the brake operating device is a tip switch (1).

3. Electronic parking brake system as claimed in claim 2, **characterized in that** the brake operating device is configured as a simplex tip switch (1).

4. Electronic parking brake system as claimed in any one of claims 2 or 3,
**characterized in that** an actuation of the tip switch (1) causes a change in the actuating condition of the electronic parking brake system, i.e., 'released'/'not released'.

5. Electronic parking brake system as claimed in claim 1, **characterized in that** the brake operating device is configured as a rocker switch or double tip switch (1).

6. Method of operating an electronic parking brake system for automotive vehicles, in particular as claimed in any one of the preceding claims, including a brake operating device and an electronic control unit (4) for converting input signals into corresponding output signals which are destined for actuation of an actuator device (11) that acts on at least one wheel brake of the parking brake system, wherein the control unit, in the capacity of input signals, determines
- the operating condition of the brake operating device (1),
- the operating condition of the service brake system (SBS), i.e., 'actuated' or 'not actuated',
- the operating condition of an ignition device (8) of the automotive vehicle, i.e., 'on' or 'off',
- the vehicle speed (v_{KFZ}),
**characterized in that** the current operating condition of the electronic parking brake system, i.e., 'released' or 'applied' is exhibited further as input signal by the control unit (4), and **in that** the output signals of the control unit (4) which are responsive to the driving situation exhibit the nominal value of the actuating force (F_{S,SOLL}) and the nominal value of the time derivative (F'_{S,SOLL}) of the actuating force (F_{S,SOLL}).

7. Method as claimed in claim 6,
**characterized in that** in the event that the electronic control unit (4) detects in a step (70) that the vehicle is riding, the electronic unit (4) will initiate a deceleration action with a quick dynamics if the service brake system is actuated, and will initiate a deceleration action with a slower dynamics if the service brake system is not actuated.

8. Method as claimed in any one of claims 6 to 7,
**characterized in that** a braking operation is initiated at least as long as the tip switch (1) is actuated.

9. Method as claimed in claim 8,
**characterized in that** the braking operation is continued with a constant nominal value of the actuating force also after the release of the tip switch (1) for a duration (T_{H}), the said duration (T_{H}) being a function of the vehicle speed (v_{KFZ}).

10. Method as claimed in any one of claims 6 to 9,
**characterized in that** in the event that the electronic control unit (4) detects in step (70) that the vehicle is within the limits of measuring accuracy, the control unit (4) will initiate a deceleration action with a quick dynamics if the service brake system is actuated, and will initiate a deceleration action with a slower dynamics if the service brake system is not actuated.

## Revendications

1. Système électronique pour frein de stationnement de véhicule automobile comportant un dispositif (1) de manoeuvre de frein et une unité de commande électronique (4) pour convertir des signaux d'entrée en signaux de sortie correspondants qui sont prévus pour commander un dispositif d'actionnement (11) agissant sur au moins un frein de roue du système pour frein de stationnement, dans lequel les signaux d'entrée contiennent
- l'état de fonctionnement du dispositif de manoeuvre du frein (1),
- l'état de fonctionnement du système du freinage de service (BBA), c'est-à-dire "actionné" ou "non actionné",
- l'état de fonctionnement d'un dispositif d'allumage (8) du véhicule automobile, c'est-à-dire "marche" ou "arrêt",
- la vitesse de marche (V_{KFZ}),
**caractérisé en ce que** les signaux d'entrée contiennent en outre l'état de fonctionnement actuel du système électronique du frein de stationnement, c'est-à-dire "desserré" ou "serré", et **en ce que** les signaux de sortie, dépendant de la situation de conduite, de l'unité de commande (4) contiennent la valeur de consigne de la force d'actionnement (F_{S, SOLL}) et la valeur de consigne de la dérivée temporelle (F'_{S, SOLL}) de la force d'actionnement (F_{S, SOLL}).

2. Système électronique de frein de stationnement selon la revendication 1, **caractérisé en ce que** le dispositif de manoeuvre du frein est un interrupteur à touche (1).

3. Système électronique de frein de stationnement selon la revendication 2, **caractérisé en ce que** le dispositif de manoeuvre du frein est réalisé sous la forme d'un bouton-poussoir simple (1).

4. Système électronique de frein de stationnement selon l'une des revendications 2 ou 3, **caractérisé en ce qu'**un actionnement de l'interrupteur à touche (1) provoque une modification de l'état d'actionnement du système électronique du frein de stationnement, c'est-à-dire "desserré"/"non desserré".

5. Système électronique de frein de stationnement selon la revendication 1, **caractérisé en ce que** le dispositif de manoeuvre du frein est réalisé sous la forme d'un bouton-poussoir double (1).

6. Procédé four faire fonctionner un système électronique de frein de stationnement de véhicule automobile, en particulier selon l'une des revendications précédentes, comportant un dispositif (1) de manoeuvre du frein et une unité de commande électronique (4) pour convertir des signaux d'entrée en signaux de sortie correspondants qui sont prévus pour commander un dispositif d'actionnement (11) agissant sur au moins un frein de roue du système pour frein de stationnement, dans lequel l'unité de commande détecte comme signaux d'entrée
- l'état de fonctionnement du dispositif de manoeuvre du frein (1),
- l'état de fonctionnement du système du freinage de service (BBA), c'est-à-dire "actionné" ou "non actionné",
- l'état de fonctionnement d'un dispositif d'allumage (8) du véhicule automobile, c'est-à-dire "marche" ou "arrêt",
- la vitesse du véhicule (V_{KFZ}),
**caractérisé en ce que** l'on a en outre comme signal d'entrée l'état de fonctionnement actuel du système électronique du frein de stationnement, c'est-à-dire "desserré" ou "serré", par l'unité de commande (4) et **en ce que** les signaux de sortie, dépendant de la situation de conduite, de l'unité de commande (4) contiennent la valeur de consigne de la force d'actionnement (F_{S, SOLL}) et la valeur de consigne de la dérivée temporelle (F'_{S,} _{SOLL}) de la force d'actionnement (F_{S, SOLL}).

7. Procédé selon la revendication 6, **caractérisé en ce que** dans le cas dans lequel l'unité de commande électronique (4) détecte au cours d'une étape (70) que le véhicule roule, l'unité de commande électronique (4) amorce un freinage avec une dynamique plus rapide lorsque le système du freinage de service est actionné, et amorce un freinage avec une dynamique plus lente lorsque le système du freinage de service n'est pas actionné.

8. Procédé selon l'une des revendications 6 ou 7, **caractérisé en ce qu'**un processus de freinage est amorcé au moins aussi longtemps que l'interrupteur à touche (1) est actionné.

9. Procédé selon la revendication 8, **caractérisé en ce que** le freinage est poursuivi avec une valeur de consigne constante de la force d'actionnement, même après que l'interrupteur à touche (1) a été relâché, pendant une durée (T_{H}), la durée (T_{H}) étant une fonction de la vitesse (V_{KFZ}) du véhicule.

10. Procédé selon l'une des revendications 6 à 9, **caractérisé en ce que** dans le cas dans lequel l'unité de commande électronique (4) détecte au cours de l'étape (70) que le véhicule est à l'arrêt dans les limites de la précision de mesure, l'unité de commande électronique (4) amorce un freinage avec une dynamique rapide si le système du freinage de service est actionné, et amorce un freinage avec une dynamique plus lente, si le système du freinage de service n'est pas actionné.
